# EUROPEAN PATENT APPLICATION

(11) **EP 4 553 470 A1**
(43) Date of publication of application: **14.05.2025**
(21) Application number: 23209240.3
(22) Date of filing: 10.11.2023
(51) Int. Cl.: G01M 3/26, G01M 99/00, E04D 13/00, B65D 90/50, B29C 65/82

(54) **DEVICE FOR CREATING A TEMPORARY AIR-IMPERMEABLE BOUNDARY**

(71) Applicant: Henriksen Studio, London EC1R 0BB (GB)
(72) Inventor: Henriksen, Thomas, London, EC1R 0BB (GB); Kearin, Oliver, London, EC1R 0BB (GB)
(74) Representative: Høiberg P/S

(57) **Abstract**

The present disclosure relates to a device for creating a temporary air-impermeable boundary, for example on a surface, such as a wall of a building. The present disclosure further relates to a system and a method for testing air-leakage of a building component by means of the device. The disclosure regards a device for creating a substantially air-impermeable interface on a building surface, comprising a flexible element made of an air impermeable material, and a sealing element for airtight attachment of the flexible element to the building surface. The present disclosure further relates to a system for measuring air leakage of a building component installed in a building surface, using this device.

## Description

The present disclosure relates to a device for creating a temporary air-impermeable boundary, for example on a surface, such as a wall of a building. The present disclosure further relates to a system and a method for testing air-leakage of a building component by means of the device.

### Background

New constructions are increasingly more focused on energy efficiency. One of the main sources of energy loss in a building is air-leakage due to improper insulation. The state of the art in testing air-leakage of rooms, buildings, building components, etc., involves expensive and time consuming solutions, such as constructing concrete or wooden components on building surfaces, with the aim of testing the leakage of a room. Such solutions require the construction of a component for each and every type of building surface. Naturally, that leads to high costs in the scenario that a construction company wishes to test thoroughly the air permeability of a building. Alternative solutions relate to a "blower door test" configuration, which creates pressure differences between two environments separated by the building component that is to be tested, such as a window. However, the blower door test has certain disadvantages such as high cost, time-inefficiency and most importantly it is incapable of being used in building components with irregular geometry.

Hence, the need for a novel solution is required that can create temporary boundaries, which are substantially air-impermeable, on building surfaces, for example to provide for reliable and cost-efficient air permeability measurements of building components.

### Summary

One purpose of the present disclosure is to provide a solution that aims in optimizing the energy efficiency of a building. An important aspect of energy efficiency within the constructions industry is air permeability, e.g. of a structure or a building component. The main source of air-leakage, which is caused by air permeability, is the windows and doors of the structure. To test air permeability of a building surface, e.g. containing a building component like a window installed in the surface, the first step is to isolate the building surface from the environment, by for example creating an airtight boundary on or near the building surface. Therefore, one embodiment the present disclosure relates to a device for creating a temporary boundary on a building surface which is substantially air-impermeable, comprising a flexible element made of an air impermeable material, and a sealing element for airtight attachment of the flexible element to the building surface. The flexible element can for example be provided in a material similar to the material used for hot air balloons, i.e. easy to handle like a soft fabric but also with zero permeability though the material itself. The sealing element are then provided to attach the flexible element to a surface, for example by means of vacuum tape and some mechanism that firmly grips the flexible element. By attaching such a device on a building surface, for example to the surface around a window, it is possible to create a substantially air-impermeable boundary. The substantially air-impermeable boundary created by the device can then be used to solve several problems encountered in buildings, such as testing air-leakage of a building surface.

The term "substantially air-impermeable boundary" serves the purpose of describing a device that comprises air-impermeable elements, such as the flexible element and at least partly the sealing element, which when assembled on a building surface, almost inevitably cause the boundary between the device and the building surface to have a finite air permeability. For that purpose, a calibration method for determining the default air permeability of the device is disclosed in here.

Having a temporary boundary on a building surface, which is substantially air-impermeable, it is then possible to solve several problems that occur during the construction of a building. Specifically, the present disclosure relates to a system for measuring air leakage of a building component installed in a building surface using the presently disclosed device for airtight attachment of a flexible element to the building surface around the building component, thereby creating a temporary boundary, which is substantially impermeable. In the preferred embodiment the system comprises a pressure generator configured for controllably inflating the flexible element to form an air-holding chamber facing the building component, and a pressure monitor configured to measure air leakage from the air holding chamber. In the preferred embodiment the system is configured to determine the air leakage of the building component by compensating the measured air leakage with the air leakage of the air-holding chamber. In that regard a main advantage arises if the air-holding chamber is having a known air leakage, for example if it has determined by means of calibration, For example, it is possible to blow air into the flexible element and measure the air-permeability of the building surface, by correlating the loss of pressure in the interior of the flexible element to the air-permeability.

To facilitate robust and accurate measurements of air-leakage on building surfaces, or to properly isolate a part of a room, it can be advantageous to conduct calibration measurements of the device, in order to determine the default air-permeability of the flexible element and the sealing element when positioned on a surface. Therefore, the present disclosure further relates to a method for calibrating the air leakage of the presently disclosed device, the method comprising: providing a testing element having an impermeable surface, attaching, preferably airtightly attaching, the sealing element to the impermeable surface of the testing element, and attaching, preferably airtightly attaching, the flexible element to the sealing element. The flexible element can then be inflated with a gas, such as air, to form an air-holding chamber facing the impermeable surface of the testing element. With the flexible element inflated like a balloon in front of the impermeable surface, controlled leakage can then be generated from the air holding chamber by forming a first opening having a predefined first size, and measure the air leakage via the first opening. The advantage comes when the controlled leakage is repeated at least once with at least a second opening having a predefined second size to obtain a plurality of measured air leakages at different opening sizes. The advantages is that several controlled leakage measurements can be used to determine the air leakage from the air-holding chamber without openings, for example by interpolating the controlled leakage measurements. Such a method is highly advantageous, as one can calibrate a specific embodiment of the device with a certain size and/or configuration of the flexible element and the sealing element to record the default air-permeability, i.e. the "known" air-leakage of the specific device, which can be subsequently subtracted when measuring the air-permeability of a building component. As a result, it is possible to measure accurately the air-permeability of a building component - and repeat the measurement for a series of similar building components, e.g. a series of similar windows installed in a building.

Moreover the present inventors have also realized that the presently disclosed device with the flexible element and the sealing element can be used for creating a temporary / semi-permanent air-impermeable partitioning of a room, typically a room having walls, floor and ceiling. The present disclosure therefore further relates to a method for creating an air-impermeable partitioning of a room, the method comprising: providing the presently disclosed device, attaching, preferably airtightly attaching, the sealing element to the floor, the ceiling and at least two walls of the room, for example such that the sealing element forms an unbroken frame defining outer edges of the partitioning, and attaching, preferably airtightly attaching, the flexible element to the sealing element, such that the flexible element forms the air-impermeable room partitioning.

In that regard the present disclosure also relates to an room partitioning system / room partitioner comprising the presently disclosed device, i.e. used as temporary, semi-permanent or even permanent air-impermeable partitioning of a room, typically a room having walls, floor and ceiling, as described in the corresponding method.

### Description of Drawings

Various embodiments are described hereinafter with reference to the drawings. The drawings are examples of embodiments and are intended to illustrate some of the features of the presently disclosed device and system for testing air leakage in building components, and are not limiting to the present disclosure.
Fig. 1 shows a schematic of a device for creating a substantially air-impermeable boundary.
Fig. 2 A,B shows a side view and an isometric projection of an embodiment of the sealing element.
Fig. 3 shows an example of an air-permeability calibration.

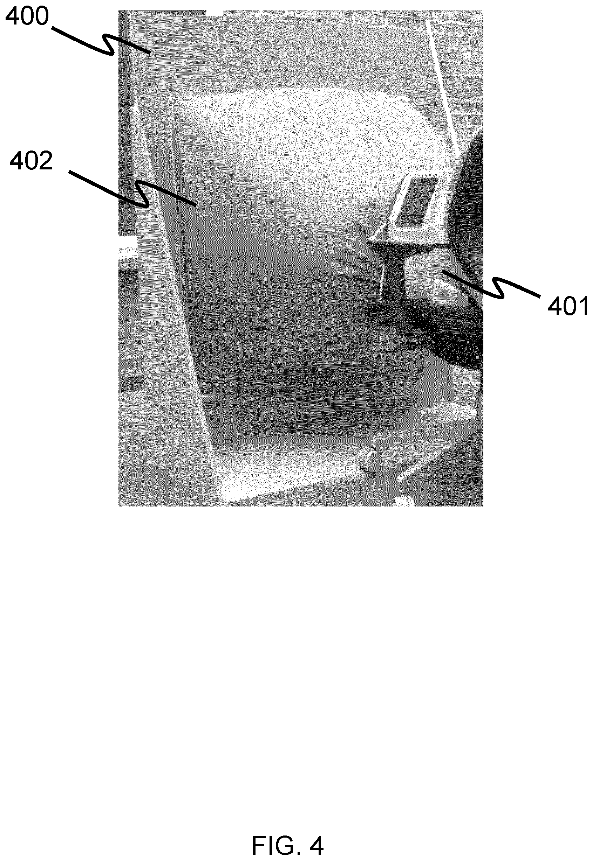

Fig. 4 shows an embodiment of the system for measuring air-leakage of a building component.
Fig. 5 shows the steps of the method for calibrating the air leakage of the device for creating a substantially air-impermeable boundary.
Fig. 6 shows the steps of the method for creating an air-impermeable partition of a room.
Fig. 7 shows a schematic of the sealing element comprising a cord.
Fig. 8 shows a schematic of the device positioned on a surface, where the flexible element is not inflated.
Fig. 9 A,B shows a schematic of a building surface comprising one and two openings.

### Detailed description

### Flexible element

The flexible element can be made of any type of fabric that can be manipulated and preferably has air permeability of less than 1 cm³/s, more preferably no air permeability. In one embodiment the air impermeable material of the flexible element is a fabric, such as coated-nylon, polyester fabric or cotton fabric. For example a material similar to the material used for hot air balloons Such materials can be well suited to be used for the flexible element, as they are durable and resilient to damage, as well as they are air-impermeable.

In one embodiment the flexible element is non-stretchable. It can be beneficial that the flexible element is non-stretchable, as that can create a more stable device when testing the air-leakage of a building surface. When air is blown into the flexible element, it may cause vibrations at the sealing element if the device is stretchable, thereby disturbing the air-impermeable characteristics of the device. However, for certain cases it might be advantageous that the flexible element is made of a stretchable material.

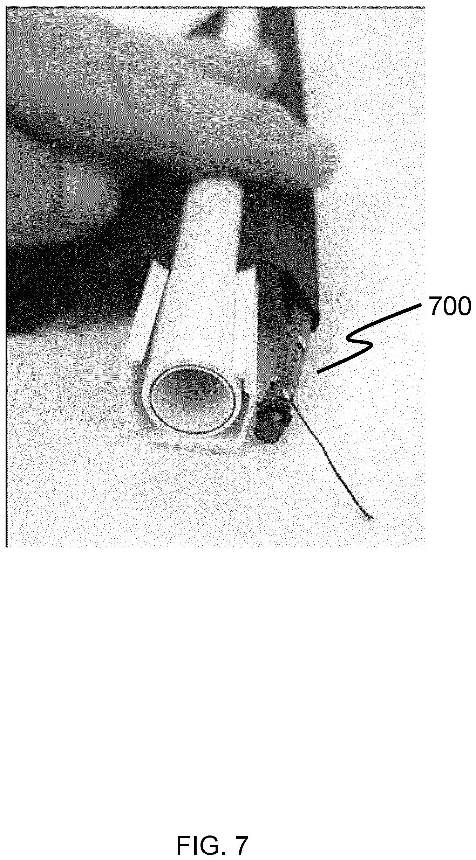

In one embodiment the flexible element comprises a stopper, such as a cord, positioned and secured along at least one edge of the flexible element. A cord may assist the sealing element into securing the flexible element on the building surface. The cord can function as a stop element to prevent the flexible element from sliding out of the engagement with the sealing element. Such a cord can for example be a rope or a nylon cord. An example of a cord 700 can be seen in Figure 7.

Furthermore, the flexible element can be designed to different size or volume requirements, in order to utilize a specific flexible element for different types of building surfaces. For example, there can be one flexible element configured to be attached on windows of a specific size or geometry and another flexible element configured for doors. In addition, the disclosed device is not limited in testing surfaces of buildings, as it can also be applied on other surfaces such as windows or doors of airplanes, ships or any other vehicle.

### Sealing element

The sealing element can comprise any kind of attaching means to secure the sealing element to the building surface, such as clamps, adhesives, staples, pins, zippers or nails. For example, an adhesive tape, like vacuum tape, or an adhesive glue can be used to secure the device on the building surface. In another embodiment, silicone glue can be used. Typically the sealing element is initially secured to the surface, and then the flexible element can be attached to the sealing element. However, the opposite may also be possible.

The sealing element may comprise a snap locking mechanism for attaching the flexible element to the sealing element. Such a mechanism can ensure that the flexible element will be attached to the building surface, and it will not be removed when introducing a pressure difference between the building surface and the environment, with the purpose of testing the air-leakage of for example a building component in the building surface. For example, the snap locking mechanism can comprise a component that can lock the fabric of the flexible element by mechanical means or adhesive means, thereby attaching the flexible element to the sealing element.

The sealing element may comprise a track for attachment to the building surface and a rim for holding of and/or attachment to and/or folding of the flexible element, wherein the track and the rim are configured to engage to form an air-tight attachment of the flexible element to the sealing element. The device can be further configured, such that the rim forms a pipe and the track forms an elongated snap-lock for snapping and gripping the pipe, allowing a section of the flexible element to be embedded / fixed between the pipe and the track. In an embodiment, the rim is be a standard polyvinyl chloride (PVC) water pipe with a diameter of between 5 and 50 mm, preferably between 10 and 30 mm, more preferably between 12 and 25 mm, such as 15 mm or 22 mm. The track can corresponding be a standard polyvinyl chloride (PVC) electrical trunking with a diameter / opening matching the rim. The length of the track and the rim can be adjusted according to the size of the flexible element that is to be used for testing a building surface, e.g. that are acquired by the meter and cut to the needed length to create a frame attached to the surface for the flexible element to fit into. Such components can be bought in any conventional store selling electrical and/or plumbing components.

In another embodiment, the track can be a rectangular container on which the fabric of the flexible element can be positioned. On top of the fabric of the flexible element that is positioned inside the track, the rim - which can be for example a cylindrical tube or pipe - can be placed, securing the fabric between the track and the rim, thereby preventing the flexible element from being removed. Thus, the sealing element secures the flexible element on the building surface.

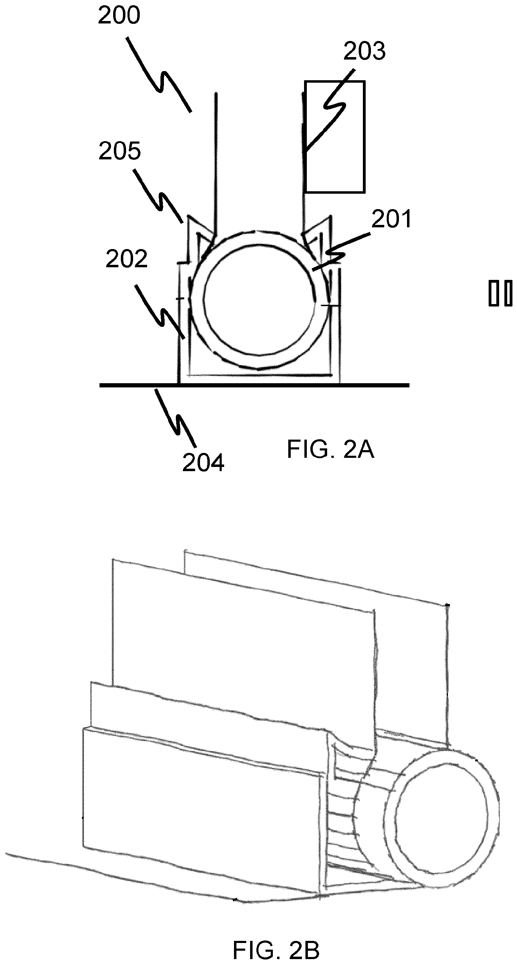

An embodiment of the track and rim parts can be seen in Fig. 2A (200), where a schematic illustrates the rim (201) that locks the fabric of the flexible element (203) and secures it on the track (202). A specially designed snap-locking profile of the track (205) allows the track to grip the rim, preventing it from being removed and air-tightly attaching the flexible element to the sealing element. As a result, by embedding the fabric of the flexible element between the track and the rim, leads to a secure attachment of the flexible element on the building surface. An isometric projection of the embodiment is shown in Fig. 2B. The track may also have cylindrical cross section, or any other geometrical cross section, configured to host a rim. The rim may also have an ellipsoidal cross section.

To further secure the attachment of the flexible element on the building surface, the sealing element may comprise vacuum tape for air tight attachment of the sealing element to the building surface. The vacuum tape can maintain an air-tight interface between the building component and the lower side of the track. For example as seen in Fig. 2, a double-sided vacuum tape (204) can be mounted on the building surface, followed by placing the track on the vacuum tape, creating an air-tight interface between the building surface and the track. The addition of the vacuum tape can be beneficial, as the interface between the sealing element and the building surface may be a source of air-leakage, due to the fact that the building surfaces may be inhomogeneous and possibly have various protrusions. Therefore, by using a vacuum tape it is possible to minimize the differences among various building components, and conduct consistent and reliable air leakage measurements. For example, if a building surface is made of bricks and another building surface is made of concrete, the surface roughness will be naturally different, causing different air leakage in the interface between the sealing element and the building surface in the absence of a vacuum tape. The vacuum tape can be disposable, using a new piece of vacuum tape for each further air leakage test on a next building surface. In an embodiment, it can be advantageous to apply vacuum tape or any other adhesive means such as adhesive glue or silicone glue on the whole perimeter of the sealing element, to decrease any sources of air-leakage from the device.

Likewise the remaining part of the sealing element are disposable and a new "frame" is created by means of a new sealing element, for example cut to size, for each air-impermeable temporary boundary that is created. Cut to size of the flexible element and/or the building component to be tested or room to be portioned. The flexible element can more easily be re-used, because it can for example easily be arranged to engage with - and disengage with - with the sealing element, e.g. by snap-lock.

In one embodiment the sealing element comprises a vacuum mechanism, where a pump is used to evacuate any air between the track and the fabric of the flexible element, and between the fabric of the flexible element and the rim. That process can further decrease the air permeability of the sealing element, providing more accurate results when testing a building surface. In another embodiment, the sealing element comprises an o-ring, configured to be attached on the building surface, such that the sealing element can be attached to it, providing reduced air-permeability of the sealing element. Optionally, the lower part of the track can comprise a cavity, adjusted such that an o-ring can fit. The o-ring can be made of any material that is commonly used in o-rings such as butadiene rubber, butyl rubber or chlorosulfonated polyethylene. In the case that the building surface is not circular to accommodate an o-ring, a vacuum component having arbitrary shape of the same material as the o-ring can be utilized. For example, a configuration can be the following: attaching a vacuum tape on a building surface, attaching the vacuum component along the vacuum tape, attaching the tracks on the vacuum tape such that the vacuum component is encapsulated by the tracks, embedding the fabric of the flexible element using rims to secure the fabric in the tracks. In the above example, the vacuum component can comprise a wire of approximately 2 cm diameter.

In another embodiment, the sealing element comprises a flexible track and a flexible rim, which can be bended to reproduce the surrounding shape of the surface to be tested without breaking. That modification offers the advantage of not requiring to cut the track and the rim to smaller pieces. Moreover, having a single unit of track and rim reduces the air permeability of the sealing element as there will be less corners susceptible to air leakage, and makes it faster for a user to set-up measurements of air permeability of a surface.

In another embodiment, the rim and the track comprise magnetic materials, such that the rim and the track attract each other. Therefore, when the fabric of the flexible element is embedded between a rim and a track, the magnetic forces ensure that the fabric is locked in place, reducing the chances that it can accidentally be removed and compromise the air permeability test of a surface.

### Device

The presently disclosed device comprises the flexible element and the sealing element. The flexible element and the sealing element may be separate elements. In certain cases, there might be several building surfaces to be tested that have different dimensions or geometries. Therefore, it can be beneficial that the sealing element and the flexible element are separable components, in order to attach the same flexible element to different sealing elements. That can be a cost efficient solution that would allow a rapid and easy testing of different building surfaces reusing elements of the device, in particular re-using the flexible element.

In practice the device might therefore be like a kit of parts, because typically it will be separated in different parts, for example the flexible element may be large roll of impermeable fabric that has to cut the in right length. However, typically the flexible element is cut / shaped into a predefined size, and possibly provided with edge stoppers, before use. For example, a kit of flexible elements can be provided, comprising a plurality of flexible elements of different sizes, aimed to be used for surfaces of different area or geometry. Accordingly, a kit of sealing elements can be provided, comprising a chain of tracks that can be cut in the desired pieces, and a piece of rim that can be cut in the desired pieces depending on the surface that is to be tested. In another embodiment, a kit of sealing elements comprises units of tracks and rims of a predefined length, such as 10 cm, which can combined with other tracks or rims in a plug and socket configuration.

Similarly a kit of sealing element may comprise vacuum tape, tracks and pipes. Such elements can possibly be separated, and might have to be cut down to the right length when attaching the flexible element to one or more surfaces. Depending on the geometry of the surface to be tested, the lengths of the separate elements can vary. For example, an elongated object will require two sets of shorter sealing elements and two sets of longer sealing elements. As a result, a user can cut two long pieces of tracks and two shorter ones, in addition two long pieces of the pipe and two shorter pieces of the pipe to assemble the sealing element.

The flexible element can also be provided in different sizes, as depending on the size of the building surface a different size of the flexible element will be required. For example, a window may require 1.5 m² of flexible element, while a larger door may require 3.75 m² of flexible element in order to fully cover it and test its air-permeability. With the same reasoning, the dimensions of the sealing elements can very, as a large building surface will require a longer sealing element in the circumference of the flexible element.

In another embodiment, the flexible element and the sealing element can be provided in different products, and are not necessarily linked to be used together. Thus, a user can mix and match a flexible element of one size with another sealing element having a second size, depending on the needs of the surfaces that they wish to test.

### System for measuring air leakage of a building component

One purpose of the presently disclosed system is to determine the air leakage of a window or window frames. It is common that gaps around windows and between window frames and walls can allow air to infiltrate, compromising the energy efficiency of a building. Therefore, by using the device disclosed, it is possible to determine the air permeability of such a window or window frame - and/or the installation thereof, and modify the window or the window frame (or the installation thereof) in order to reduce its air permeability.

But the building surface to be tested is not limited to windows or window frames. The building surface can be any surface in a building such as a window, window frame, exterior door, exterior wall, roof, ceiling, attic, electrical outlets, ventilation fans, exhaust fans or wall penetrations such as penetrations for plumbing. Generally, any surface that may cause air leakage to a building can be tested by the device.

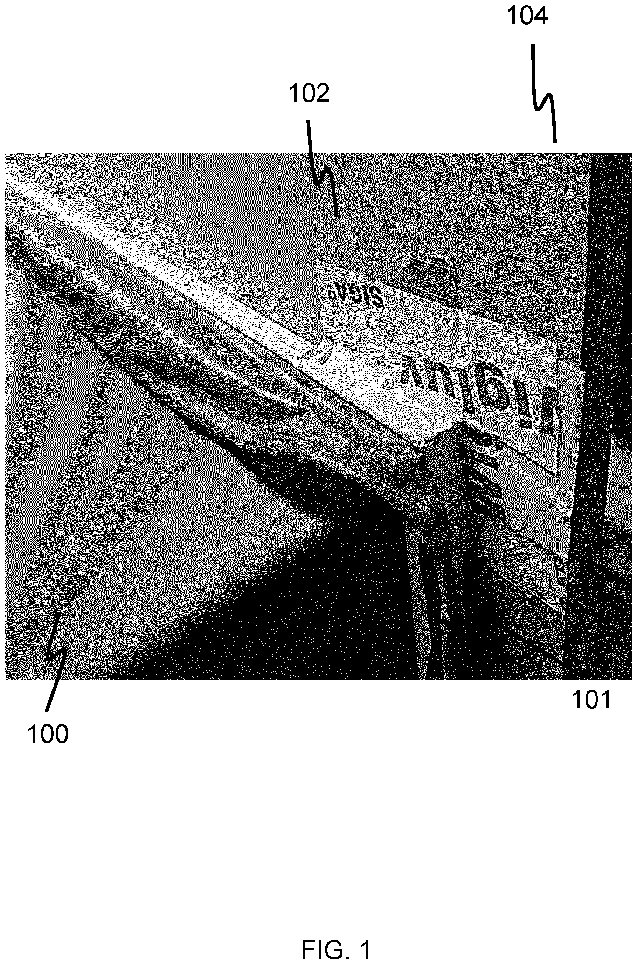

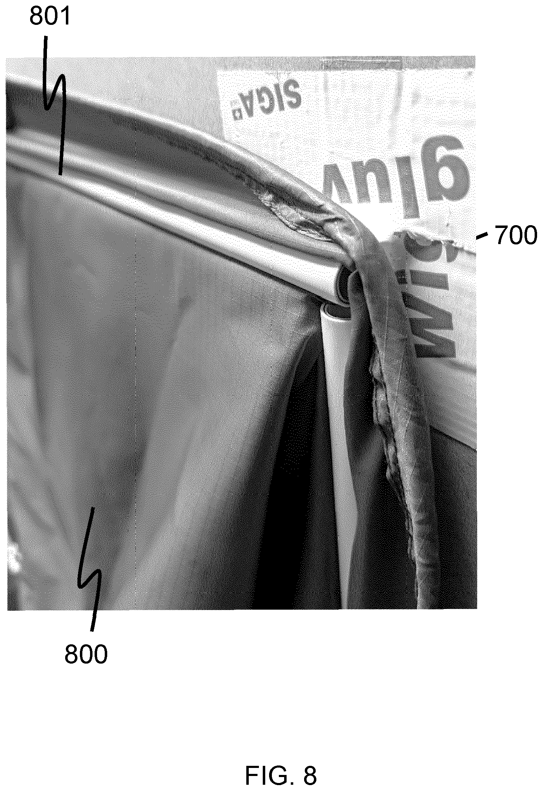

Figure 1 shows a schematic of the device (104), where a flexible element (100) is attached to a building surface (102) with the assistance of a sealing element (101). In the embodiment shown in Figure 1, the flexible element is inflated with air. In another embodiment shown in Figure 8, the flexible element (800) is not inflated, and the sealing element (801) is visible. In this embodiment, the sealing element comprises the components disclosed in the previous paragraphs, such as a track and a rim configuration to secure the fabric of the flexible element.

Specifically, the present disclosure relates to a system for measuring air leakage of a building component installed in a building surface, the system comprising: the presently disclosed device with the presently disclosed flexible element and sealing element for airtight attachment of the flexible element to the building surface around the building component, a pressure generator configured for controllably inflating the flexible element to form an air-holding chamber facing the building component, the air-holding chamber having a known air leakage, and a pressure monitor configured to measure air leakage from the air holding chamber, wherein the system is configured to determine the air leakage of the building component by compensating the measured air leakage with the known air leakage of the air-holding chamber. As mentioned in the sections above, one way that the device can quantify the air-permeability of a building surface is by inflating the flexible element and maintaining a certain pressure difference with the environment. If any air-leakage is present, then some air will evacuate the flexible element, reducing the pressure in its interior.

In an embodiment, the pressure generator can blow air to the flexible element, and be configured to maintain a stable pressure inside the flexible element. To counteract the loss of pressure caused by the air-permeable building surface or the device, the pressure generator can comprise a fan that can blow air to the flexible element, maintaining the pressure stable. Such a fan can be any type of fan that is capable of producing an air flow towards the flexible element of around 10000 m³/h at ambient pressure, and an air flow of around 9000 m³/h at 50 Pa. The fan can have a flow accuracy of approximately 5%, and it can be powered from an electricity source, such as a battery or a power supply outlet. For example, the pressure generator can be the fan of the blower door system used in the "Retrotec 300 series blower door system" or "Retrotec 5000 series blower door system". Or even these Retrotec systems can be used as the pressure generator themselves. Such a fan can have an open range maximum flow at 50 Pa of 13900 m³/h, and a maximum flow at 300 Pa of 6800 m³/h. Therefore, the fan can be used as a pressure generator for the system described above, inflating the flexible element and maintaining a stable pressure in the air-holding chamber. The flow of the pressure generator can be adjusted by the pressure monitor which is described below.

In one embodiment the pressure monitor is configured to measure the pressure in the interior of the flexible element, preferably continuously, and measure changes in the pressure of the flexible element, typically caused by air-leakage in the building surface or by air-leakage of the air-holding chamber. Advantageously, the pressure monitor is connected to the pressure generator via a cable connection or wireless connection, allowing the pressure monitor to adjust the flow of air to the flexible element that the pressure generator produces. The flow of air adjustment can be recorded by the pressure monitor, allowing the pressure monitor to correlate the additional amount of air that is blown to the flexible element to the air-permeability of the building surface that is tested. For example, if a building surface has a lot of gaps or cracks that allow air to penetrate or evacuate from, then the pressure of the flexible element will decrease rapidly, triggering a command from the pressure monitor to the pressure generator to activate the fan at a larger rate, in order to keep the pressure stable. The rate that the fan is operating can be correlated to the air-permeability of the building surface, providing an accurate estimate of the air permeability. In this step, it can be beneficial that a calibration of the air permeability of the device has been performed, or will be performed later, as it can be possible to subtract the default air permeability of the device, i.e. the "known" / calibrated air permeability of the device, from the measured air permeability. The pressure monitor can be powered by a battery or by a power supply outlet. In an embodiment, the pressure monitor is configured to measure the pressure in the flexible element and the exterior pressure within 1 second time intervals, i.e. substantially continuously. The pressure monitor can measure the pressure inside the flexible element by using a pressure sensor such as a piezoelectric sensor, a capacitive sensor or a strain gauge sensor.

In an embodiment, the pressure monitor can store data of pressure measurements from a plurality of surfaces. In another embodiment, the pressure monitor may also measure air flow through the flexible element caused by the pressure generator, a feature that can be useful as it can be a validation for proving that the pressure generator is increasing or decreasing the air flow as intended.

For example, the pressure monitor can be a "Retrotec DM32X digital gauge" which is a manometer capable of controlling the speed of a fan such as the pressure generator, and it can also calculate the flow rate going through the fan to the flexible element. The DM32X digital gauge can comprise a digital monitor for displaying the values of pressure in the flexible element, and real-time changes of the pressure. These values can be extracted by the pressure monitor to a computer, which can process the data and determine the value of air-permeability of the building surface that is tested. In an embodiment, the data can be stored to the pressure monitor, and a user can transfer the data at a later stage to analyze them.

In an embodiment, it can be advantageous for the flexible element to comprise a stopper, e.g. in the cord as described previously, as the stopper can make the device more robust in the scenario where higher pressures are applied in the flexible element. Thus, the pressure generator can be allowed to work at a larger rate, inflating the flexible element faster, making the air-leakage measurements a faster process.

### Calibrating air leakage

The present disclosure relates to a method for calibrating the air leakage of the presently disclosed device, the method comprising: providing a testing element having an impermeable surface, attaching the sealing element to the impermeable surface of the testing element, attaching the flexible element to the sealing element, inflating the flexible element with a gas, such as air, to form an air-holding chamber facing the impermeable surface of the testing element, generating controlled leakage from the air holding chamber by forming a first opening having a predefined first size, and measure the air leakage via the first opening, repeating controlled leakage at least once with at least a second opening having a predefined second size to obtain a plurality of measured air leakages at different opening sizes, interpolating the measured air leakages to determine the air leakage from the air-holding chamber without openings.

As described herein, various sources of air leakage can be formed when using the device on a building surface. Therefore, calibrating the device on a testing platform can be very beneficial, as it can provide the default air permeability of the device caused by any sources not related to the actual air permeability of the surface to be tested. Such sources of default air permeability can be for example at the interface of the device to a building surface, relating to the sealing element. Therefore, knowing the default air permeability of the device makes it possible to subtract that value from the air permeability measurements of a building surface, and record an air permeability value that reflects the building surface disregarding the effect of the device.

One approach to perform the calibration is to attach the device on a testing element which initially has one opening from which air can escape. By filling the device with air, a certain amount of air will escape per minute from the opening, resulting in a first measurements of the air permeability of the device. The air permeability can be quantified by measuring pressure changes in the flexible element, for example by a similar procedure as described for the presently disclosed system for testing air leakage.

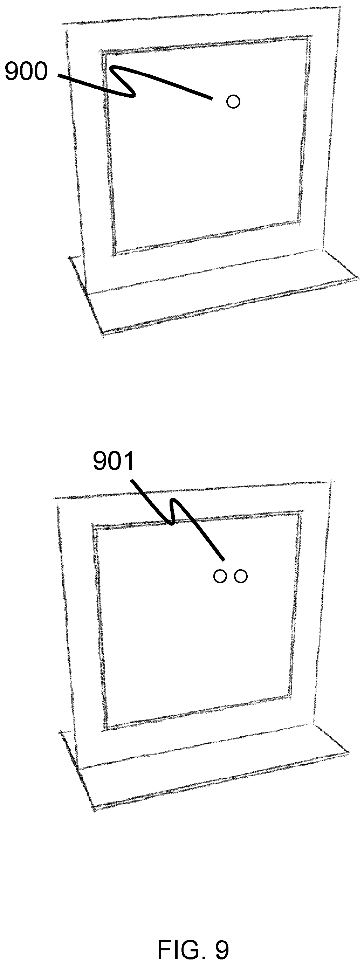

In an embodiment, four groups of four openings, for example having a diameter of 2 mm can be formed, wherein the holes are spaced apart, preferably space equally apart, for example by 50 mm, with the aim of producing a smooth laminar airflow, creating more accurate calibration results. For example, Figure 9 shows a schematic of a building surface having a number of openings. Figure 9A shows a building surface with one opening (900) while Figure 9B shows a building surface with two openings (901). In an embodiment, four groups of four openings having a diameter of 2 mm can be formed, wherein the holes are spaced 50 mm apart, with the aim of producing a smooth laminar airflow, creating more accurate calibration results. By performing the same experiment on the same testing element having more openings, it is possible to acquire the relation between the number of openings of the testing element and the air permeability of the whole system of device plus the testing element. Therefore, after acquiring several data points, it is possible to extrapolate the data, preferably linear extrapolation, to extract the air permeability of the system when the testing element has no openings. That value would reflect the default air permeability of the device, which can then be subtracted in actual measurements of building surfaces.

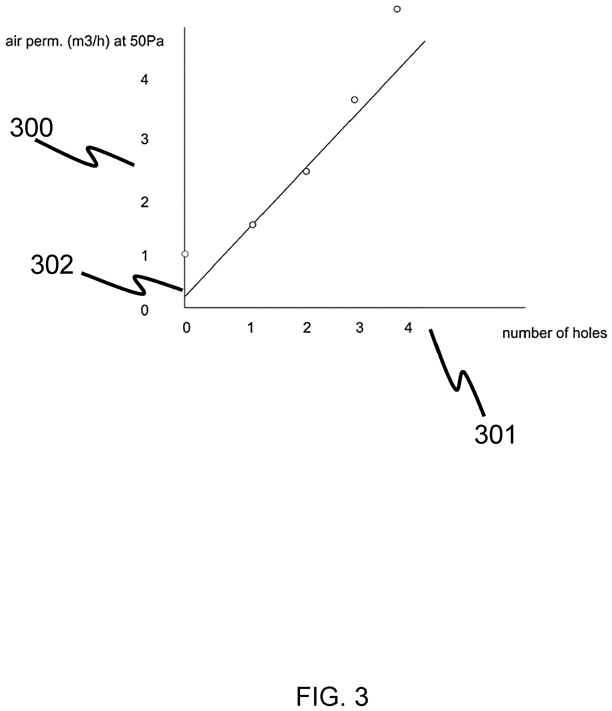

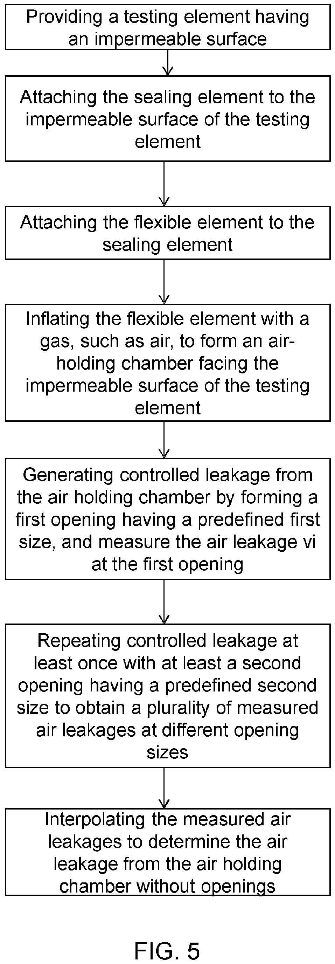

Fig. 3 shows a data set of air permeability (300) with respect to number of openings (301) on a test element, revealing the default air permeability (302) of the device. This calibration method is straightforward to perform on demand in order to optimize the accuracy of the air permeability measurements on a building surface. The calibration method can be simplified if the flexible element is made of non-stretchable material, as a stretchable material would incorporate more parameters to the calibration method, due to anomalies in the way that air can be evacuated from a stretchable material. That occurs because the shape of a stretchable material can change during the calibration method, and it might depend on the number of openings or on the total volume that the flexible element contains. Therefore, a non-stretchable material can lead to more accurate and reliable calibration results. It can also be important that the flexible element is made of air-impermeable material. If the calibration method is conducted with a flexible element being air-permeable, then the default air permeability may be larger than the air-permeability of a building surface that is to be tested, making it very challenging for a user to distinguish between the default permeability and the actual air-permeability of the surface that is to be tested. Figure 5 shows the steps of the method for calibrating the air leakage of the device.

In an embodiment, the openings can be provided in the testing element and/or in the sealing element, such as in the track. For example, instead of having the opening in the testing element, it is possible to have a fully air-impermeable testing element, and by using a track with a plurality of openings one can perform the calibration method.

In another embodiment, the openings can be different holes of the same size. It can be beneficial for the calibration process that the openings have the same size, as that should reflect a linear correlation between the air permeability and the number of openings, making the extrapolation process more reliable.

Moreover, the openings can be different holes of varying and/or increasing size. In some calibration processes it might be beneficial to have openings of different size, as that may make the calibration process more reliable, if knowing the formula correlating the air permeability to the size of the openings.

In addition, the openings may originate from the same hole that is varied in size. For example, the test element can comprise an adjustable aperture, that can be used to adjust the size of a hole. Using that mechanism, it is possible to perform a thorough calibration process by only using one opening in the test element.

In an embodiment, the number of measured different air leakages can be at least three, preferably at least four. It is know that the relation between the air permeability and the number of openings with the same size is linear, therefore at least two data points would be required to extrapolate and determine the default air permeability of the device. However, a larger number can also be beneficial, as it can increase the accuracy of the extrapolated value of the default air permeability of the device.

### Partition of a room

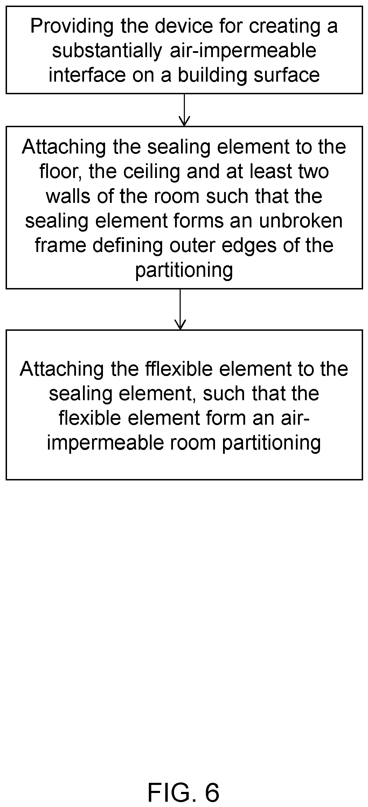

The present disclosure further relates to a method for creating a semi-permanent air-impermeable partitioning of a room having walls, floor and ceiling, the method comprising: providing the presently disclosed device, attaching, preferably air-tightly, the sealing element to the floor, the ceiling and at least two walls of the room such that the sealing element forms an unbroken frame defining outer edges of the partitioning, attaching, preferably air-tightly, the flexible element to the sealing element, such that the flexible element forms the air-impermeable room partitioning. Hence, the presently disclosed device is not only usable to test air leakage of already existing building surfaces such as windows or doors, but it can also be advantageously be utilized to build temporal structures such as temporal walls or doors, in order to partition a part of a room, with the purpose of testing air leakage on that part. For example, if there is air leakage in an apartment during construction, it is possible to partition the apartment to several rooms, with the purpose of identifying the source of the air leakage. This process can significantly enhance the speed that an air-leak is detected compared to state of the art solutions. The above solution may also be used for the purpose of simply isolating a part of a room from another part. Figure 6 shows the steps for creating an air-impermeable partition of a room.

In practice a frame defining the outer edges of the room partitioning can be defined on the floor, walls and ceiling of a room by means of the sealing element, e.g. just be parts cut to size and attached to the floor, walls and ceiling. The approximate area of the room partitioning is knows in advance such that the flexible element can be cut to size, possible with cord stopper along the edges. The flexible element can then be engaged with the sealing element, e.g. by means of a snap-lock mechanism, and possibly manually tightened by pulling the edges, and substantially air-impermeable room portioning has been created, much faster and cheaper than for example building a room partitioning in plastic or wood.

In that regard the present disclosure also relates to an room partitioning system / room partitioner comprising the presently disclosed device, i.e. used as temporary, semi-permanent or even permanent air-impermeable partitioning of a room, typically a room having walls, floor and ceiling, as described in the corresponding method.

### Items

1. A device for creating a temporary boundary on a building surface which is substantially air-impermeable, comprising:
   - a flexible element made of an air impermeable material, and
   - a sealing element for airtight attachment of the flexible element to the building surface.
2. The device according to item 1, wherein the air impermeable material of the flexible element is a fabric, such as coated-nylon, polyester fabric or cotton fabric.
3. The device according to any one of the preceding items, wherein the flexible element is non-stretchable.
4. The device according to any one of the preceding items, wherein the flexible element comprises a cord, positioned along at least one edge of the flexible element.
5. The device according to any one of the preceding items, wherein the flexible element and the sealing element are separate elements.
6. The device according to any one of the preceding items, wherein the sealing element comprises a snap locking mechanism for attaching the flexible element to the sealing element.
7. The device according to any one of the preceding items, wherein the sealing element comprises a track for attachment to the building surface and a rim for holding of and/or attachment to the flexible element, wherein the track and the rim are configured to engage to form an air-tight attachment of the flexible element to the sealing element.
8. The device according to item 4, wherein the rim forms a pipe and wherein the track forms an elongated snap-lock for snapping and gripping the rim, allowing a section of the flexible element to be embedded / fixed between the rim and the track.
9. The device according to any one of the preceding items, the sealing element comprising vacuum tape for air tight attachment of the sealing element to the building surface.
10. A method for calibrating the air leakage of the of the device of any of the preceding items, the method comprising:
   - providing a testing element having an impermeable surface,
   - (airtightly) attaching the sealing element to the impermeable surface of the testing element,
   - (airtightly) attaching the flexible element to the sealing element,
   - inflating the flexible element with a gas, such as air, to form an air-holding chamber facing the impermeable surface of the testing element,
   - generating controlled leakage from the air holding chamber by forming a first opening having a predefined first size, and measure the air leakage via the first opening,
   - repeating controlled leakage at least once with at least a second opening having a predefined second size to obtain a plurality of measured air leakages at different opening sizes,
   - interpolating the measured air leakages to determine the air leakage from the air-holding chamber without openings.
11. The method according to item 7, wherein the openings are provided in the testing element and/or in the sealing element, such as in the track.
12. The method according to any of preceding items 7-8, wherein the openings are different holes of the same size.
13. The method according to any of preceding items 7-9, wherein the openings are different holes of varying and/or increasing size.
14. The method according to any of preceding items 7-**Fejl! Henvisningskilde ikke fundet.,** wherein the openings originate from the same hole that is varied in size.
15. The method according to any of preceding items 7-10, wherein the number of measured different air leakages is at least three, preferably at least four.
16. A method for creating a semi-permanent air-impermeable partitioning of a room having walls, floor and ceiling, the method comprising:
   - providing the device according to any of the preceding items 1-6,
   - (airtightly) attaching the sealing element to the floor, the ceiling and at least two walls of the room such that the sealing element forms an unbroken frame defining outer edges of the partitioning,
   - (airtightly) attaching the flexible element to the sealing element, such that the flexible element forms the air-impermeable room partitioning.
17. A system for measuring air leakage of a building component installed in a building surface, the system comprising:
   - the flexible element and the sealing element according to any of the preceding items 1-6 for airtight attachment of the flexible element to the building surface around the building component,
   - a pressure generator configured for controllably inflating the flexible element to form an air-holding chamber facing the building component, the air-holding chamber having a known air leakage, and
   - a pressure monitor configured to measure air leakage from the air holding chamber, wherein the system is configured to determine the air leakage of the building component by compensating the measured air leakage with the known air leakage of the air-holding chamber.
18. The system of item 12, wherein the pressure monitor is configured to continuously measure the pressure in the interior of the flexible element, and measure changes in the pressure of the flexible element caused by air-leakage in the building surface or the air-holding chamber.
19. The system of any of items 12-14, wherein the pressure generator is configured to blow air to the flexible element, maintaining the pressure inside the flexible element stable.

## Claims

1. A device for creating a temporary boundary on a building surface which is substantially air-impermeable, comprising:
- a flexible element made of an air impermeable material, wherein the air impermeable material is a fabric, such as coated-nylon, polyester fabric or cotton fabric, and wherein the flexible element is non-stretchable, and
- a sealing element for airtight attachment of the flexible element to the building surface, wherein the sealing element comprises a snap locking mechanism for attaching the flexible element to the sealing element.

2. The device according to claim 1, wherein the flexible element comprises a cord, positioned along at least one edge of the flexible element.

3. The device according to any one of the preceding claims, wherein the flexible element and the sealing element are separate elements.

4. The device according to any one of the preceding claims, wherein the sealing element comprises a track for attachment to the building surface and a rim for holding of and/or attachment to the flexible element, wherein the track and the rim are configured to engage to form an air-tight attachment of the flexible element to the sealing element.

5. The device according to claim 4, wherein the rim forms a pipe and wherein the track forms an elongated snap-lock for snapping and gripping the rim, allowing a section of the flexible element to be embedded / fixed between the rim and the track.

6. The device according to any one of the preceding claims, the sealing element comprising vacuum tape for air tight attachment of the sealing element to the building surface.

7. A method for calibrating the air leakage of the of the device of any of the preceding claims, the method comprising:
- providing a testing element having an impermeable surface,
- airtightly attaching the sealing element to the impermeable surface of the testing element,
- airtightly attaching the flexible element to the sealing element,
- inflating the flexible element with a gas, such as air, to form an air-holding chamber facing the impermeable surface of the testing element,
- generating controlled leakage from the air holding chamber by forming a first opening having a predefined first size, and measure the air leakage via the first opening,
- repeating controlled leakage at least once with at least a second opening having a predefined second size to obtain a plurality of measured air leakages at different opening sizes,
- interpolating the measured air leakages to determine the air leakage from the air-holding chamber without openings.

8. The method according to claim 7, wherein the openings are provided in the testing element and/or in the sealing element.

9. The method according to any of preceding claims 7-8, wherein the openings are different holes of the same size.

10. The method according to any of preceding claims 7-9, wherein the openings originate from the same hole that is varied in size.

11. A method for creating a temporary air-impermeable partitioning of a room having walls, floor and ceiling, the method comprising:
- providing a flexible element made of an air impermeable material, and a sealing element,
- attaching the sealing element to the floor, the ceiling and at least two walls of the room such that the sealing element forms an unbroken frame defining outer edges of the partitioning, and
- attaching the flexible element to the sealing element, such that the flexible element forms the air-impermeable room partitioning.

12. The method of claim 11, wherein the flexible element and the sealing element are defined according to any of the preceding claims 1-6.

13. A system for measuring air leakage of a building component installed in a building surface, the system comprising:
- a flexible element made of an air impermeable material, and
- a sealing element for airtight attachment of the flexible element to the building surface around the building component,
- a pressure generator configured for controllably inflating the flexible element to form an air-holding chamber facing the building component, the air-holding chamber having a known air leakage, and
- a pressure monitor configured to measure air leakage from the air holding chamber, wherein the system is configured to determine the air leakage of the building component by compensating the measured air leakage with the known air leakage of the air-holding chamber.

14. The system of claim 13, wherein the flexible element and the sealing element are defined according to any of the preceding claims 1-6.

15. The system of any of preceding claims 13-14, wherein the pressure monitor is configured to continuously measure the pressure in the interior of the flexible element, and measure changes in the pressure of the flexible element caused by air-leakage in the building surface or the air-holding chamber, and wherein the pressure generator is configured to blow air to the flexible element, maintaining the pressure inside the flexible element stable.
